# EUROPÄISCHE PATENTSCHRIFT

(11) **EP 3 083 208 B1**
(45) Veröffentlichungstag und Bekanntmachung des Hinweises auf die Patenterteilung: **14.10.2020**
(21) Anmeldenummer: 14824441.1
(22) Anmeldetag: 17.12.2014
(51) Int. Cl.: B29C 70/08, B29C 70/24, B64C 1/06, B29L 31/30, B29K 683/00

(54) **AKUSTIK-KABINENPANEEL UND VERFAHREN ZUR HERSTELLUNG EINES AKUSTIK-KABINENPANEELS**
ACOUSTIC CABIN PANEL AND METHOD FOR PRODUCING AN ACOUSTIC CABIN PANEL
PANNEAU ACOUSTIQUE DE CABINE ET PROCÉDÉ POUR LA FABRICATION D'UN PANNEAU ACOUSTIQUE DE CABINE

(30) Priorität: 17.12.2013 DE 102013114253
(43) Veröffentlichungstag der Anmeldung: 26.10.2016
(73) Patentinhaber: Airbus Defence and Space GmbH, 85521 Ottobrunn (DE); Airbus Operations GmbH, 21129 Hamburg (DE)
(72) Erfinder: ENDRES, Gregor Christian, 85276 Pfaffenhofen (DE); WEBER, Hans-Jürgen, 21129 Hamburg (DE)
(74) Vertreter: Krebs, Jörg
(86) Internationale Anmeldenummer: PCT/EP2014/078271
(87) Internationale Veröffentlichungsnummer: WO 2015/091674

(56) Entgegenhaltungen:
- US-A1- 2008 277 057
- US-A1- 2013 266 765

## Beschreibung

Die vorliegende Erfindung betrifft ein Paneel mit einem akustisch und mechanisch optimierten Kernverbund, und betrifft insbesondere ein Akustik-Kabinenpaneel, ein Luftfahrzeug, ein Verfahren zur Herstellung eines Akustik-Kabinenpaneels und eine Verwendung eines Akustik-Kabinenpaneels in einem Fahrzeug.

Kabinenbereiche, beispielsweise in einem Luftfahrzeug oder anderen Fahrzeugen, werden oftmals mit einer Innenraumverkleidung ausgebildet, die beispielsweise vor einer tragenden Struktur angeordnet ist. Die Verkleidung weist beispielsweise eine Vielzahl von Kabinenpaneelen auf. Neben der Aufgabe der Begrenzung des Kabinenraums werden Kabinenpaneele auch zur Verbesserung der akustischen Raumeigenschaften herangezogen. Beispielsweise werden Kabinenpaneele mit akustisch dämpfenden Strukturen ausgebildet, z.B. Sandwich-Konstruktionen mit einer Wabenkemplatte als Kernschicht und akustisch dämpfenden Deckschichten. Es hat sich jedoch gezeigt, dass die Wabenkernstrukturen zur Anpassung an die unterschiedlichen Raumformen aufwendig umgeformt werden müssen, was wiederum auch Auswirkungen auf die akustischen Eigenschaften hat. In der DE 10 2005 024408 A1 ist die Verstärkung von Schaumwerkstoffen beschrieben. Ein Hartschaumstoff wird zwischen zwei Decklagen angeordnet, die mit einem Nähverfahren miteinander verbunden werden. Die für die Vernähung verwendeten Faserbündel werden mit einem Matrixmaterial verfüllt, beispielsweise mit einem Harz infiltriert. Es hat sich jedoch gezeigt, dass das Infiltrieren mit Harz aufwendig ist.

US 2008 277057 A1 bezieht sich auf Verbundlaminate, die in strukturellen Anwendungen verwendet werden, und die eine Zwischenschicht aus weichem Material enthalten, das eine Dämpfungswirkung bietet, um Geräusche und Vibrationen zu reduzieren. Die Zwischenschicht kann ein viskoelastisches Material aufweisen, das sich unter Belastung durch Stoß, Geräusch oder Vibration verformt. Eine Verstärkung kann in das viskoelastische Material eingebettet sein, um die mechanische Festigkeit und Steifheit des Laminats aufrechtzuerhalten. Die Verstärkung kann einzelne oder gewebte Fasern oder geriffelte Röhren enthalten, die der Zwischenschicht Steifheit verleihen.

US 2013 0266765 A1 bezieht sich auf ein Strukturbauteil für ein Luft- oder Raumfahrzeug mit einem flächigen Element, einem Verstärkungselement, das von dem flächigen Element absteht und mit diesem fest verbunden ist. Das Verstärkungselement weist zumindest eine Schaumschicht und eine Deckschicht auf. Eine Vielzahl von Pins erstreckt sich zumindest durch die Schaumschicht und die Deckschicht. Zumindest die Pins und die Deckschicht weisen eine aushärtbare Matrix auf.

Es besteht daher ein Bedarf, ein einfacher herzustellendes Kabinenpaneel mit optimierten akustischen Eigenschaften zur Verfügung zu stellen.

Dies wird durch ein Akustik-Kabinenpaneel, ein Luftfahrzeug, ein Verfahren und eine Verwendung nach einem der unabhängigen Ansprüche erreicht. Beispielhafte Ausführungsformen sind in den abhängigen Ansprüchen dargestellt. Es sei darauf hingewiesen, dass die Merkmale der Ausführungsbeispiele der Vorrichtungen auch für Ausführungsformen des Verfahrens sowie Verwendung der Vorrichtung gelten und umgekehrt. Außerdem können auch diejenigen Merkmale frei miteinander kombiniert werden, bei denen dies nicht explizit erwähnt ist.

Gemäß der Erfindung ist ein Akustik-Kabinenpaneel vorgesehen, das eine erste und eine zweite Schicht aufweist, die durch eine Zwischenschicht voneinander beabstandet sind und zusammen mit einer Vielzahl von Armierungselementen ein Kemverbundbauteil bilden. Außerdem ist wenigstens eine Zwischenlage aus einem Kernmaterial vorgesehen, das in der Zwischenschicht angeordnet ist. Die Armierungselemente erstrecken sich von der ersten bis zur zweiten Schicht durch die wenigstens eine Zwischenlage und sind in fertigem Zustand des Paneels zug- und druckbelastbar. Die Armierungselemente sind wenigstens teilweise mit einem aushärtbaren Matrixmaterial infiltrierbar. In der ersten und/oder der zweiten Schicht ist wenigstens ein mit Matrixmaterial getränktes Prepreg vorgesehen. Die mit Matrixmaterial zu infiltrierenden Armierungselemente stehen mit dem Prepreg in Verbindung.

Durch das Vorsehen des Prepregs und die Verbindung der Armierungselemente mit dem Prepreg wird das Infiltrieren der Armierungselemente vereinfacht. Das Prepreg ermöglicht ein einfaches Einbringen des Matrixmaterials in die Konstruktion, da das Prepreg während des Zusammenlegens der Schichten für das Kernverbundbauteil vorgesehen wird, bzw. eingelegt wird, so dass weitere, insbesondere speziellere Arbeitsschritte zur Infiltrierung des Matrixmaterials entfallen können. Durch die Verbindung der Armierungselemente mit dem Prepreg kann das Matrixmaterial sozusagen von den Armierungselementen aufgesaugt werden, bzw. von dem Prepreg zu den Armierungselementen fließen.

Der Begriff "Prepreg" bezeichnet wenigstens eine Lage aus einem Faserverbundwerkstoff, der Hochleistungsfasern, wie z.B. Kohlefasern, Aramidfasern o. a., aufweist, und wenigstens teilweise mit einem Matrixmaterial oder Bindermaterial getränkt oder versehen ist, das aushärtbar ist, bzw. in fertigem Zustand des Paneels bereits ausgehärtet ist. Das Matrixmaterial kann flüssig sein und die Fasern können damit getränkt sein. Das Matrixmaterial kann auch zähflüssig sein oder als (klebriges) Pulver vorliegen, bevor es ausgehärtet wird.

Neben der Verwendung von Hochleistungsfasern für ein Prepreg ist auch vorgesehen, dass anderes Faser- oder Gewebematerial als Transportmedium für das Matrixmaterial dient.

In einem Beispiel weist wenigstens die erste oder die zweite Schicht ein zusätzliches Prepreg auf. In einem anderen Beispiel ist wenigstens die erste oder die zweite Schicht ein Prepreg. In einem weiteren Beispiel ist in der ersten und der zweiten Schicht ein Prepreg vorgesehen.

Mit dem Begriff "Armierungselement" werden strukturell wirkende Komponenten bzw. Elemente innerhalb des Bauteils bezeichnet, die zu einer Verstärkung des Bauteils beitragen, d.h. das Bauteil armieren im Sinne von Bewehrung zur Verbesserung der statischen, d.h. lastabtragenden Eigenschaften. Die Armierungselemente können als separate Elemente vorgesehen sein oder auch integral mit andere Elementen, Komponenten, Bereichen, etc. ausgebildet sein.

Der Begriff "Kernverbundbauteil" bezieht sich auf ein flächiges Bauteil, das einen mehrlagigen Aufbau aufweist mit mindestens einer ersten und einer zweiten Lage, zwischen denen eine Kernlage (auch als Kernschicht bezeichnet) angeordnet ist. Die Kernlage dient dazu, die beiden Lagen beabstandet voneinander zu halten. Dadurch können bei einer senkrecht auf die Fläche wirkenden Kraft die beiden Lagen, d.h. die beiden äußeren, durch den Kern beabstandeten Lagen, verschiedene statische Funktionen übernehmen. Beispielsweise bildet bei einer als Druckkraft wirkenden Kraft die der Kraft zugewandte, d.h. nähere Lage eine druckbeanspruchte Zone, während die der Kraft abgewandte, d.h. entferntere Lage eine zugbeanspruchte Zone bildet. Zur Ausbildung der statischen Funktionen muss die Zwischenlage also eine gewisse Dicke aufweisen.

Das Akustik-Kabinenpaneel ist mindestens derart biegesteif, dass es selbsttragend ist. Das Akustik-Kabinenpaneel ist beispielsweise nicht verformbar, nachdem die erste und die zweite Schicht, sowie die Zwischenschicht mit der Zwischenlage, mit den Armierungselementen miteinander verbunden sind, nachdem das Matrixmaterial in den Armierungselementen ausgehärtet ist.

Die Armierungselements sind in fertigem Zustand des Paneels zug- und druckbelastbar, wobei der Begriff "fertiger Zustand" den eingebauten Zustand des Paneels bezeichnet, bzw. auch den Zustand während der Handhabung, wenn das Matrixmaterial ausgehärtet ist. Die Zugbelastbarkeit ist bereits durch die Armierungselements selbst zumindest zu einem nicht geringen Anteil gegeben. Die Druckbelastbarkeit wird insbesondere bei Fadenelementen zum größten Teil durch das Matrixmaterial zur Verfügung gestellt, wenn dieses ausgehärtet ist.

Über die Ausbildung der Zwischenlage, insbesondere durch das Kernmaterial werden die akustischen Eigenschaften des Paneels gewährleistet. Die mechanischen Eigenschaften werden durch den Kemverbund geprägt.

Beispielsweise ist die Zwischenlage mit den benachbarten Schichten über die Fläche schubfest verbunden, z.B. verklebt und/oder durch mehrere Armierungselemente verbunden bzw. verknüpft.

Die Armierungselemente sind z.B. mit den benachbarten Lagen fest verbunden.

Das Material der Zwischenlage wird auch als Kernmaterial bezeichnet.

In einem Beispiel sind die erste und die zweite Schicht als Deckschichten ausgebildet und bilden mit der Zwischenschicht eine Sandwichkonstruktion.

In einem Beispiel ist das Paneel aufgrund der Kemverbundwirkung der Zwischenlage mit den Armierungselementen selbsttragend.

Der Begriff "selbsttragend" bezieht sich darauf, dass das Paneel, d.h. das Akustik-Kabinenpaneel, in der Lage ist, das Eigengewicht zu tragen. Der Begriff "selbsttragend" bezieht sich auch darauf, dass das Paneel nach dem Aushärten des Matrixmaterials der Armierungselemente während der weiteren Handhabung, wie z.B. Montage oder Endverarbeitung, seine Form und Kontur behält.

In einem Beispiel stehen die mit Matrixmaterial zu infiltrierenden Armierungselemente mit dem Prepreg derart in Verbindung, dass Matrixmaterial aus dem Prepreg zu den Armierungselementen gelangt oder bereits dorthin gelangt ist, z.B. bei Erwärmen der Vorrichtung, so dass das Matrixmaterial flüssig wird und die Armierungselemente z.B. durch Kapillarwirkung infiltriert werden.

Das Infiltrieren der Armierungselemente mit dem Matrixmaterial kann auch durch einen Vakuumprozess erfolgen, oder auch in Kombination von Kapillarwirkung und Druckunterschieden, bzw. Vakuum.

Die Verbindung kann auch als kommunizierende Verbindung bezeichnet werden.

In einem Beispiel sind die Armierungselemente mit dem aushärtbaren Matrixmaterial infiltriert, z.B. vor dem Einsetzen der Armierungselemente.

Gemäß einem Beispiel ist vorgesehen, dass auf einer Fläche von beispielsweise ca. 16 x 16 mm² ein bis zwei Armierungselemente vorgesehen sind. In einem anderen Beispiel sind auf einer entsprechenden Fläche auch mehr Armierungselemente vorgesehen, und in einem anderen Beispiel ist die gleiche Anzahl von Armierungselementen auf einer größeren Fläche angeordnet.

Die Armierungselemente haben beispielsweise einen Durchmesser im Bereich von ca. 0,1 mm bis ca. 5 mm, z.B. einen Durchmesser von 0,5 mm bis 1,5 mm.

In einem weiteren Beispiel ist vorgesehen, dass mehrere Schichten eines Kemverbunds vorgesehen werden zur Verbesserung der dämpfenden Eigenschaften bei gleichzeitiger Erhöhung der mechanischen Stabilität.

In einem anderen Beispiel ist das Akustik-Kabinenpaneel auch bereits vor dem Aushärten der Armierungselemente, bzw. vor dem Aushärten des Matrixmaterials der infiltrierten Armierungselemente, derart biegesteif, dass es selbsttragend ist.

Der Begriff "selbsttragend" bezieht sich gemäß einem Beispiel auch darauf, dass das Paneel vor dem Aushärten des Matrixmaterials der Armierungselemente für die weitere Handhabung seine Form und Kontur beibehält.

Der Begriff "wenigstens eine Zwischenlage aus einem Kernmaterial" umfasst die Ausbildung von genau einer Zwischenlage. Der Begriff umfasst auch zwei Zwischenlagen, drei Zwischenlagen, vier Zwischenlagen, fünf Zwischenlagen, sechs Zwischenlagen, sieben Zwischenlagen, acht Zwischenlagen, neun Zwischenlagen oder auch zehn Zwischenlagen. Der Begriff umfasst auch mehr als zehn Zwischenlagen, z.B. fünfzehn Zwischenlagen oder mehr.

Gemäß der Erfindung ist die Zwischenlage einen Werkstoff auf, der elastisch komprimierbar ist und eine geringe Biegesteifigkeit aufweist.

Dadurch wird eine weiter verbesserte akustische Eigenschaft zur Schallreduktion im Sinne der Verbesserung der akustischen Situation in der Kabine zur Verfügung gestellt.

Unter "elastisch komprimierbar" wird beispielsweise die Eigenschaft verstanden, dass der Werkstoff zumindest 1/10 der Schichtdicke elastisch komprimierbar ist, d.h. zusammengedrückt werden kann und danach wieder ungefähr die gleiche Schichtdicke einnimmt wie vor dem Komprimieren. Beispielsweise ist der Werkstoff um 1/5, 1/4, 1/3 oder die Hälfte, oder mehr, elastisch komprimierbar.

Unter "geringe Steifigkeit" wird beispielsweise ein Werkstoff verstanden, der einen niedrigen E-Modul aufweist, d.h. einen niedrigen Elastizitäts-Modul, beispielsweise mit einem Wert geringer als 0,5 Gigapascal, beispielsweise geringer als 0,1 Gigapascal. In einem Beispiel ist ein E-Modul von 0,01 bis 0,1 Gigapascal vorgesehen. Auf jeden Fall ist der E-Modul derart gering, dass er einen Wert unter 1 aufweist.

Gemäß der Erfindung besteht die Zwischenlage aus einem Schaumwerkstoff. In einem Beispiel ist das Kernmaterial elastisch komprimierbar.

In einem Beispiel bildet die wenigstens eine Zwischenlage aus dem komprimierbaren Kernmaterial eine primäre Zwischenlage, und es ist eine sekundäre Zwischenlage vorgesehen, die aus einem nicht komprimierbaren Material besteht, oder aus einem Material, das deutlich weniger elastisch komprimierbar ist, z.B. ist die elastische Komprimierbarkeit um die Hälfte geringer. In einem anderen Beispiel ist eine elastische Komprimierbarkeit mit einem Unterschied von 3:1 oder 4:1 oder 5:1 oder 10:1 oder einem noch größeren Verhältnis bezogen auf die verschiedenen Zwischenlagen der Zwischenschicht vorgesehen.

Es können beispielsweise auch mehrere Zwischenlagen aus dem komprimierbaren Material vorgesehen sein. Außerdem können auch eine oder mehrere Zwischenlagen aus dem nicht komprimierbaren Material vorgesehen sein.

Der Schaumwerkstoff kann als biegesteifer Plattenwerkstoff vorgesehen sein. Der Schaumwerkstoff kann dabei an eine dreidimensionale Form angepasst sein. Der Schaumwerkstoff kann auch als biegeweicher und z.B. elastischer Plattenwerkstoff vorgesehen sein, der sich an unterschiedliche Formen anpassen lässt.

Das Kernmaterial kann auch ein ungeordnetes Fasergut oder ein Gewebe sein, solange die Komprimierbarkeit gegeben ist. Der Begriff "komprimierbar" bezieht sich auf Material, das sich unter der Wirkung einer senkrecht auf die Fläche wirkenden Kraft auf mehr als ca. 20 %, beispielsweise 30 %, 40 % oder ca. 50 % der Dicke zusammendrücken lässt.

Gemäß der Erfindung ist das Kernmaterial ein Silikonschaumgummi.

Beispielsweise ist das Kernmaterial als Silikonschaumstoff zwischen zwei Deckhäuten vorgesehen, von denen mindestens eine als CFK-Deckhaut (Kohlefaserverbundwerkstoff) angeordnet ist.

In einem weiteren Beispiel sind die Armierungselemente mit der ersten und der zweiten Schicht verbunden.

Unter "verbunden" wird eine Verbindung der Armierungselemente mit der ersten und/oder der zweiten Schicht bezeichnet, bei der eine Kraftübertragung zwischen der ersten bzw. zweiten Schicht und dem Armierungselement gegeben ist, wobei insbesondere Zug- und Druckkräfte übertragen werden können. Die Verbindung kann auch als kraftübertragende Verbindung bezeichnet werden. Je nach Ausbildung der ersten und zweiten Schicht kann auch ein Moment übertragen werden, z.B. ein Biegemoment, d.h. die Armierungselemente können in der ersten und/oder zweiten Schicht auskragend befestigt sein. Die kraftübertragende Verbindung der Armierungselemente mit den Schichten führt dazu, dass ein Kemverbundbauteil mit verbesserten statischen Eigenschaften zur Verfügung gestellt wird, bei gleichzeitiger Optimierung der akustischen Eigenschaften.

Gemäß einem Beispiel sind die Armierungselemente biegesteif und mit der ersten und der zweiten Kernschicht verbunden.

Die Armierungselemente sind im fertigen, z.B. ausgehärteten Zustand biegesteif.

In einem weiteren Beispiel sind die Armierungselemente bereits beim Zusammenfügen des Kemverbundbauteils biegesteif ausgebildet.

Die Armierungselemente sind als biegesteife Linearelemente ausgebildet, die sich in Richtung der Dicke der Zwischenschicht erstrecken.

Die Armierungselemente sind beispielsweise durch die Kernschicht, d.h. die Zwischenschicht, bzw. die Lagen hindurchgesteckte Pins, Stäbe oder Rippen. Die Verbindung mit den einzelnen Lagen/Schichten kann beispielsweise durch Kleben erfolgen.

Die Armierungselemente sind in einem weiteren Beispiel mit weiteren Lagen fest verbunden und erstrecken sich über die gesamte Dicke des Paneels und verbinden die Lagen miteinander.

Die Armierungselemente sind in einem weiteren Beispiel z.B. über mindestens die Hälfte der Dicke der Zwischenschicht biegesteif. Vorzugsweise sind die Armierungselemente über die gesamte Dicke der Zwischenschicht biegesteif.

In einem weiteren Beispiel erstrecken sich die Armierungselemente über jeweils eine Zwischenschicht, wobei mehrere Zwischenschichten vorgesehen sind. Die Armierungselemente können beispielsweise in den einzelnen Zwischenschichten in Richtung der Dicke des Paneels auch versetzt angeordnet sein, oder zueinander ausgerichtet.

Gemäß einem Beispiel sind die Armierungselemente als Fadenelemente ausgebildet, und die Fadenelemente sind mit dem aushärtbaren Matrixmaterial infiltrierbar, bzw. sind bereits mit dem Matrixmaterial infiltriert.

Die Fadenelemente bilden eine Vernähung, die mit dem ausgehärteten Matrixmaterial getränkt eine Armierung bilden, welche die Zwischenlage wenigstens mit den beiden benachbarten Lagen verbindet, so dass die Lagen zusammen mit der Zwischenlage ein Kernverbundbauteil bilden.

Die Fadenelemente können mit Matrixmaterial getränkt oder imprägniert sein.

Die Fadenelemente können aus einer Vielzahl von Fasern bestehen, z.B. Faserbündel.

Die Armierungselemente können als Verbindung der Zwischenlage mit den benachbarten Lagen vorgesehen sein.

Die Armierungselemente können senkrecht zur Fläche der Zwischenschicht ausgebildet sein oder schräg dazu verlaufen. Die Armierungselemente können gerade, gekrümmt oder polygonal ausgebildet sein.

Der Begriff "Fadenelemente" bezieht sich beispielsweise auf verdrillte Monofile, z.B. Monofile eines Fasermaterials, wofür auch der Begriff "Faden" bzw. "Fäden" verwendet wird. Der Begriff "Fadenelemente" bezieht sich auch auf nicht verdrillte Monofile, z.B. gestreckte Monofile. Mit "Fadenelemente" werden dünne, flexible lineare Elemente bezeichnet, die aus mehreren einzelnen Fasern zusammengesetzt sein können oder auch nur eine einzige Faser aufweisen können. die Flexibilität bezieht sich hier auf eine Richtung quer zur Längsrichtung, und nicht auf eine Flexibilität in linearer Richtung. Der Querschnitt der Fadenelemente ist beispielsweise rund, eckig oder amorph.

Die Fadenelemente bilden eine Vernähung, die mit dem ausgehärteten Matrixmaterial getränkt eine Armierung bilden, welche die Zwischenlage mit den benachbarten Lagen verbindet, so dass die erste und die zweite Schicht zusammen mit der Zwischenschicht ein Kemverbundbauteil bilden.

Die Fadenelemente können mit Matrixmaterial getränkt oder imprägniert sein, oder auch nach Einbringen der Fadenelemente infiltriert werden. Die Fadenelemente können aus einer Vielzahl von Fasern bestehen, z.B. Faserbündel.

Das Infiltrieren, oder Tränken, oder Imprägnieren erfolgt zumindest zu einem Teil durch die Verbindung mit dem wenigstens einen Prepreg. Neben der "Versorgung" mit dem Matrixmaterial aus dem Prepreg können die Fadenelemente, bzw. die Armierungselemente, aber auch zusätzlich imprägniert bzw. getränkt sein.

Die Armierungselemente können, wie bereits erwähnt, schräg zur Fläche des Akustik-Kabinenpaneels verlaufen oder auch senkrecht dazu. Die senkrechte und schräge Anordnung kann auch kombiniert vorgesehen sein. Die Armierungselemente können gerade, gekrümmt oder polygonal ausgebildet sein, wie bereits erwähnt, wobei ein linearer Verlauf zur Ausbildung des Kemverbundeffekts von Vorteil ist.

Die Armierungselemente können aus Metall, Polymer oder Keramik bestehen. Die Armierungselemente können auch als Verbundbauteile ausgebildet sein, z.B. faserverstärkte Verbundbauteile aus einer Hochleistungsfaser mit einem Matrixmaterial. Beispielsweise können Metallpins oder Keramikpins vorgesehen sein, oder Pins aus Kohlefaserverbundkunststoff.

Gemäß einem Beispiel verlaufen die Armierungselemente zu einer Schichtrichtung und Schichtdicke des Akustik-Kabinenpaneels schräg.

Mit dem Begriff "schräg" wird eine Richtung bezeichnet, die von der senkrechten Richtung abweicht, wobei "senkrecht" einen Bereich von ungefähr 90° zur Längsrichtung bzw. Erstreckungsrichtung des Kabinenpaneels bezeichnet. Die Schichtdicke bezeichnet beispielsweise die kürzeste Verbindungslinie zwischen den beiden äußeren Seiten im Falle eines gekrümmten Kabinenpaneelabschnitts. Unter "Schichtrichtung" wird die Richtung der Schicht, bzw. der ersten Schicht, der zweiten Schicht oder der Zwischenschicht in der Längsausrichtung des Kabinenpaneels verstanden. Der Begriff "schräg" bezeichnet z.B. eine Richtung, die um mindestens ca. 10° von der jeweiligen Bezugsrichtung abweicht. "Schräg zur Schichtdicke" bezeichnet beispielsweise einen Verlauf, der um mindestens 10° von der Schichtdickenrichtung abweicht. Unter "schräg" wird beispielsweise eine Abweichung von mindestens 30°, oder mindestens 45° verstanden.

Gemäß einem Beispiel ist die Zwischenlage wenigstens im Bereich der Armierungselemente mit einer Sperrbehandlung versehen, die ein Eindringen von Matrixmaterial beim Infiltrieren der Armierungselemente verhindert.

Die Sperrbehandlung ist beispielsweise eine Beschichtung. Die Sperrbehandlung ist z.B. eine Gummimatrix.

Gemäß einem Beispiel bestehen die erste und die zweite Schicht aus faserverstärktem Kunststoff und/oder einem Metallwerkstoff

Gemäß der Erfindung ist auch ein Luftfahrzeug vorgesehen, das wenigstens einen in einer Rumpfkonstruktion angeordneten Kabinenbereich aufweist. Der Kabinenbereich umfasst eine Paneele aufweisende Innenverkleidung. Wenigstens ein Teil der Paneele ist als Akustik-Kabinenpaneele nach einem der vorhergehenden Beispiele und Ausführungsformen ausgebildet.

Dadurch wird, bezogen auf den Passagierkomfort innerhalb des Kabinenbereichs, eine verbesserte Akustik zur Verfügung gestellt, da die Akustik-Kabinenpaneele aufgrund der beispielsweise als Schaumwerkstoff ausgebildeten Zwischenschicht bezogen auf die Querrichtung zur Fläche eine Elastizität aufweisen, und damit insbesondere eine reduzierte Körperschallübertragung ermöglichen und auch eine verbesserte Dämpfungs- bzw. Absorptionswirkung zeigt, insbesondere für tieffrequente Schallfelder. Aufgrund des Kernverbunds, d.h. der Kemverbundwirkung durch die Armierungselemente, sind die Akustik-Kabinenpaneele aber auch ausreichend stabil in mechanischer Hinsicht, um als Innenverkleidung eingesetzt zu werden.

Gemäß der Erfindung ist auch ein Verfahren zur Herstellung eines Akustik-Kabinenpaneels vorgesehen. Das Verfahren weist folgende Schritte auf:
a) In einem ersten Schritt wird eine Zwischenschicht zwischen einer ersten und einer zweiten Schicht angeordnet, wobei die erste und die zweite Schicht durch die Zwischenschicht voneinander beabstandet sind. Die Zwischenschicht weist dabei wenigstens eine Zwischenlage aus einem Kernmaterial auf, das in der Zwischenschicht angeordnet ist. Außerdem ist ein mit Matrixmaterial getränktes Prepreg in wenigstens einer der beiden ersten und zweiten Schichten vorgesehen.
b) In einem zweiten Schritt wird eine Vielzahl von Armierungselementen angeordnet, die sich von der ersten bis zur zweiten Schicht durch die wenigstens eine Zwischenlage erstrecken und die in fertigem Zustand des Paneels zug- und druckbelastbar sind.
c) In einem dritten Schritt wird wenigstens ein Teil der Armierungselemente mit einem aushärtbaren Matrixmaterial infiltriert. Die erste Schicht, die Zwischenschicht und die zweite Schicht bilden zusammen mit den Armierungselementen ein Kernverbundbauteil.

Gemäß einem Beispiel sind die Armierungselemente als Fadenelemente ausgebildet und es ist weiter ein vierter Schritt vorgesehen, in dem das Matrixmaterial aushärtet.

Gemäß einem weiteren Beispiel ist vorgesehen, dass vor dem Aushärten des Matrixmaterials ein Anpassen an eine Form oder eine Kontur erfolgt.

Gemäß einem weiteren Beispiel ist vorgesehen, dass das Matrixmaterial vor dem vollständigen Aushärten nur zu einem Teil aushärtet und sich das Matrixmaterial dann in einem B-Stage Zustand befindet, in dem ein Teil des Matrixmaterials ausgehärtet und ein Teil noch nicht ausgehärtet ist. Das Anpassen an eine Form oder eine Kontur ist erst danach vorgesehen.

Das Plattenmaterial wird zunächst in den B-Stage Zustand überführt und kann beispielsweise in einer ebenen Form als Platte bzw. Halbzeug vorliegen. Obwohl das Material schon teilweise ausgehärtet ist, lässt sich das Material dennoch nach dem Erwärmen gut formen. Damit lässt sich z.B. Plattenware günstig herstellen und die Umformung lässt sich gut in anschließende Arbeitsprozesse integrieren und auch vergleichsweise schnell durchführen.

Beispielsweise wird dies durch einen elastischen Kern noch unterstützt, z.B. bei einem elastischen Schauwerkstoff für den Kern.

Gemäß einem Beispiel erfolgt das Anordnen der Armierungselemente vor der Formgebung.

Gemäß einem Beispiel ist vorgesehen, dass das mit Matrixmaterial getränkte Prepreg nur in einer der beiden ersten und zweiten Schichten, bzw. Decklage vorgesehen ist. Eine Formgebung erfolgt dann vor dem Aufbringen eines mit Matrixmaterial getränkten Prepregs in der anderen der beiden ersten und zweiten Schichten. Erst danach wird das mit Matrixmaterial getränkte Prepreg in der anderen Schicht bzw. Decklage aufgebracht.

Dadurch wird die Umformung weiter erleichtert und es wird eine Möglichkeit zur Verbesserung der Oberflächenqualität zur Verfügung gestellt.

Beispielsweise erfolgt die Aufbringung der Prepreg(deck)lagen in zwei Schritten: Zunächst wird bei einer ebenen Platte einseitig ein Prepreg aufgebracht. Durch Anlegen eines Vakuums auf der Gegenseite kann beispielsweise Luft aus den Armierungselementen gesaugt werden, z.B. wenn gleichzeitig Harzmaterial, d.h. Matrixmaterial, eingesaugt wird. In einem weiteren Schritt der Herstellung der Plattenware wird dann die andere Seite mit einer Prepreg-Lage versehen.

Gemäß der Erfindung ist auch die Verwendung eines Akustik-Kabinenpaneels nach einem der oberhalb erwähnten Beispiele in einem Fahrzeug vorgesehen.

Unter Fahrzeugen werden insbesondere zivile Fahrzeuge, z.B. Personenkraftwagen, Geldtransporter, Busse, Kleinbusse verstanden, sowie auch Militärfahrzeuge. Unter Fahrzeugen werden auch schienengebundene Fahrzeuge verstanden. Unter Fahrzeuge werden insbesondere auch Luftfahrzeuge verstanden, z.B. Flugzeuge und Helikopter.

Gemäß einem Aspekt der Erfindung ist ein Paneel vorgesehen, das als SandwichKonstruktion aufgebaut ist. Bei dem Kemverbund wird als Kernschicht eine Schicht vorgesehen, die an sich nur moderate bis gar keine mechanischen Eigenschaften aufweist, und alleine eigentlich nicht in der Lage wäre, die tragende Funktion des Kemverbunds zu übernehmen. Da aber eine strukturelle Armierung vorgesehen ist, wird die Kernschicht in ihren mechanischen Eigenschaften derart beeinflusst, dass die tragende Funktion für den Kernverbundaufbau gewährleistet ist. Bei dem Verbund erfolgt beispielsweise eine Vernähung mit den Decklagen und eine anschließende Infiltrierung mit Matrixmaterial. Wenn die Stichdichte nicht zu hoch vorgesehen ist, kann die Kernlage, beispielsweise ein Silikonschaumstoff, akustisch dämpfend wirken und die Armierungen sind mechanisch tragend. Je höher die Stichdichte vorgesehen wird, umso dominanter wird der versteifende Effekt, so dass sich durch die Gesamthöhe des Verbundes und die Stichdichte die Eigenschaften des Verbundes, hinsichtlich einer Abwägung zwischen der mechanischen Stabilität und der akustischen Dämpfung, bestimmen lassen. Beispielsweise kann ein kaum oder wenig belastetes Verkleidungsbauteil, z.B. im Deckenbereich einer Kabinenverkleidung, eine geringere Stichdichte aufweisen, so dass auf diese Weise die Außengeräusche weiter gedämpft werden können und so ein - auf die Akustik bezogen - angenehmeres Kabinenambiente für den Nutzer, d.h. beispielsweise den Passagier oder die Crew geschaffen werden kann. Gemäß der Erfindung ist vorgesehen, dass einerseits ein Kernmaterial verwendet wird, das sehr elastisch oder weich ist, und damit optimale akustische Eigenschaften bzw. Dämpfungen ermöglicht. Bei dem weichen Material können Schwingungen nicht übertragen werden, sondern werden in Form von Wärmeenergie im Werkstoff umgesetzt und damit absorbiert. Da weiche Materialien wiederum schlechte bis gar keine mechanischen Eigenschaften aufweisen, wird zusätzlich eine Verbindung in Form der Armierungselemente vorgesehen, um dem Bauteil eine gewisse mechanische Festigkeit zu geben, die das Kernmaterial, beispielsweise ein Silikonschaumgummi, nicht hat. Neben der für die akustischen Eigenschaften vorgesehen Elastizität der Kernschicht ermöglicht die Elastizität aber auch noch eine vereinfachte Formgebung, beispielsweise vor dem Härten der Armierungselemente. Damit lassen sich Paneele zur Verfügung stellen, die sich besser verarbeiten lassen und insbesondere auch weniger Nacharbeit bedingen, und zudem auch kostengünstiger sind als beispielsweise Wabenkerne, die für die Formgebung bzw. Anpassung an Raumprofile beispielsweise gecrasht werden müssen. Das Vorsehen eines an sich (zu) weichen Kemwerkstoffs ermöglicht zum einen eine akustische Dämpfung und zum anderen kann dadurch das üblicherweise vorgesehene Wabenmaterial entfallen, was eine Gewichts- und Platzersparnis bedeutet. Durch das erfindungsgemäße Vorsehen eines Prepreg-Materials, welches mit den Armierungselementen in Verbindung steht, bedeutet eine wesentliche Vereinfachung während des Herstellungsverfahrens und gewährleistet auch eine Verbesserung der mechanischen Eigenschaften, ohne jedoch die akustischen Dämpfungseigenschaften zu beeinträchtigen.

Nachfolgend wird anhand der beigefügten Zeichnungen näher auf ein Ausführungsbeispiel der Erfindung eingegangen. Es zeigen:
- **Fig. 1**: einen Querschnitt durch ein Beispiel eines Akustik-Kabinenpaneels;
- **Fig. 2A**: ein weiteres Beispiel eines Akustik-Kabinenpaneels im Querschnitt;
- **Fig. 2B**: ein noch weiteres Beispiel eines Akustik-Kabinenpaneels mit mehreren Zwischenlagen;
- **Fig. 2C**: ein weiteres Beispiel eines Akustik-Kabinenpaneels mit mehreren Kernverbundstrukturen;
- **Fig. 3**: einen Querschnitt eines Kabinenpaneels in einem Beispiel mit schräg verlaufenden Armierungselementen;
- **Fig. 4**: ein weiteres Beispiel eines Akustik-Kabinenpaneels mit als Vernähung ausgebildeten Armierungselementen;
- **Fig. 5**: ein Beispiel eines Luftfahrzeugs mit einem Kabinenbereich mit Akustik-Kabinenpaneelen als Innenverkleidung in einem schematischen Querschnitt;
- **Fig. 6**: ein Beispiel eines Verfahrens zur Herstellung eines Akustik-Kabinenpaneels; und
- **Fig. 7**: ein weiteres Beispiel eines Herstellungsverfahrens.

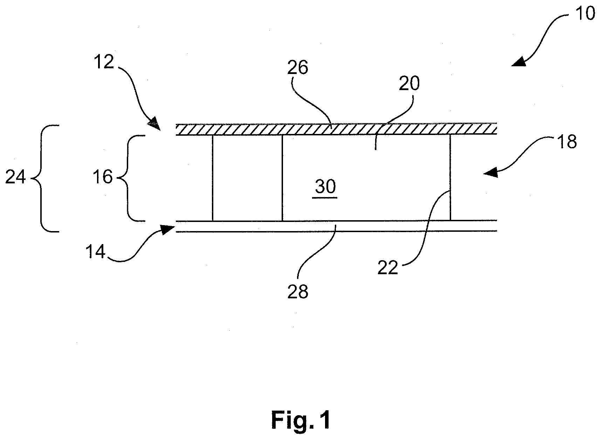

Fig. 1 zeigt ein Akustik-Kabinenpaneel 10, das eine erste Schicht 12 und eine zweite Schicht 14 aufweist, wobei dazwischen eine Zwischenschicht 16 vorgesehen ist, durch welche die erste und die zweite Schicht 12, 14 voneinander beabstandet sind. In der Zwischenschicht 16 ist wenigstens eine Zwischenlage 18 aus einem Kernmaterial 20 vorgesehen.

Die erste und die zweite Schicht 12, 14 bilden zusammen mit einer Vielzahl von Armierungselementen 22 ein Kemverbundbauteil 24. Die Armierungselemente 22 sind zug- und druckbelastbar und erstrecken sich von der ersten Schicht 12 bis zur zweiten Schicht 14 durch die wenigstens eine Zwischenlage 18. Die Armierungselemente sind wenigstens teilweise mit einem aushärtbaren Matrixmaterial (nicht näher gezeigt) infiltrierbar. Dazu ist wenigstens ein mit Matrixmaterial getränktes Prepreg 26 (in Fig. 1 durch eine Schraffur angedeutet) in der ersten und/oder der zweiten Schicht vorgesehen. Die mit Matrixmaterial zu infiltrierenden Armierungselemente 22 stehen mit dem Prepreg 26 in Verbindung.

Die erste Schicht 12 kann auch als erste Decklage bezeichnet werden, und die zweite Schicht 14 als zweite Decklage.

In Fig. 1 ist die erste Schicht 12 als das mit Matrixmaterial getränkte Prepreg 26 gezeigt, und die zweite Schicht 14 als eine davon abweichende Schicht 28, was mit einer anderen Querschnittsdarstellung symbolisiert ist. In einem weiteren, nicht gezeigten Beispiel sind die erste und die zweite Schicht 12 ,14 beide als Prepreg ausgebildet.

Die Zwischenlage ist 18 aus einem Werkstoff gebildet, der elastisch komprimierbar ist und der eine geringe Steifigkeit aufweist. Beispielsweise weist die Zwischenlage einen niedrigen E-Modul auf, der beispielsweise einen geringeren Wert als 1 Gigapascal aufweist, beispielsweise ein einem Bereich von 0,1 bis 0,01 Gigapascal. Die Zwischenlage 18 besteht aus einem Schaumwerkstoff 30 in Form von Silikonschaumgummi.

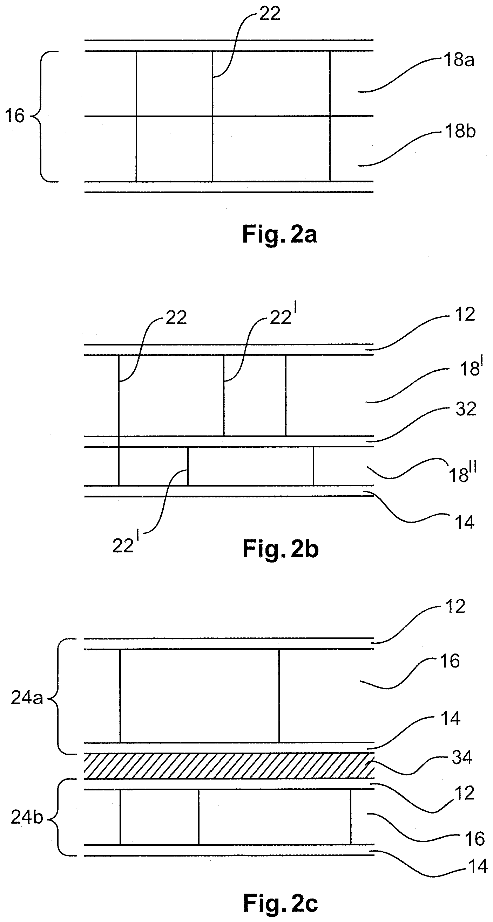

Fig. 2A zeigt ein weiteres Beispiel, bei dem die Zwischenschicht 16 mit zwei Zwischenlagen 18a, 18b ausgebildet ist. Die beiden Zwischenlagen 18a, 18b können beide mit dem gleichen Kernmaterial ausgebildet sein, oder mit unterschiedlichen Kernmaterialien. Beispielsweise erstrecken sich die Armierungselemente 22 durch beide Zwischenlagen 18a, 18b.

Beispielsweise weist die eine der beiden Zwischenlagen den elastisch komprimierbaren Werkstoff auf, der eine geringe Steifigkeit aufweist, und die andere der beiden Zwischenlagen weist einen davon abweichenden Werkstoff auf, beispielsweise einen festeren Werkstoff.

In den Figuren sind die Armierungselemente 22 mit einer einfachen Linie gezeigt. Die Armierungselemente 22 können dabei unterschiedlich ausgebildet sein, insbesondere auch unterschiedliche Querschnitte und Durchmesser haben. Beispielsweise weisen die Armierungselemente 22 einen Durchmesser im Bereich von ca. 0,1 mm bis ca. 5 mm auf, z.B. einen Durchmesser von 0,5 mm bis 1,5 mm.

In Fig. 2B ist eine Ausführungsform gezeigt, bei der eine erste Zwischenlage 18' zwischen der ersten Schicht 12 und einer weiteren Schicht 32 angeordnet ist, welche bezogen auf die Zwischenlage 18' eine zweite Schicht bildet und für eine noch weitere Zwischenlage 18" eine erste Schicht bildet. Auf der gegenüberliegenden Seite ist noch eine weitere, außen liegende Schicht angeordnet, die als die zweite Schicht 14 für die noch weitere Zwischenlage 18" fungiert. Die Armierungselemente 22 können durchlaufend angeordnet sein, d.h. von der einen äußeren Schicht zur gegenüberliegenden zweiten äußeren Schicht, oder versetzt angeordnet sein, wie durch Bezugszeichen 22' angedeutet.

Fig. 2C zeigt eine weitere Ausführungsform, bei der ein erster Kemverbund 24a und ein zweiter Kemverbund 24b vorgesehen sind, mit den jeweiligen ersten und zweiten Schichten 12, 14 und einer dazwischen liegenden Zwischenschicht 16. Zwischen den beiden Kemverbünden 24a, 24b ist eine weitere Schicht 34 vorgesehen, beispielsweise mit einer tragenden Struktur oder auch als weitere dämpfende Struktur, je nach Anforderungsprofil.

Gemäß einem weiteren Beispiel ist vorgesehen, dass die Armierungselemente biegesteif sind und mit der ersten und der zweiten Schicht verbunden sind.

Die Armierungselemente 22 können dabei senkrecht zur Schichtrichtung, d.h. parallel zur Schichtdicke verlaufen, wie in den Figuren 1, 2A, 2B und 2C angedeutet ist.

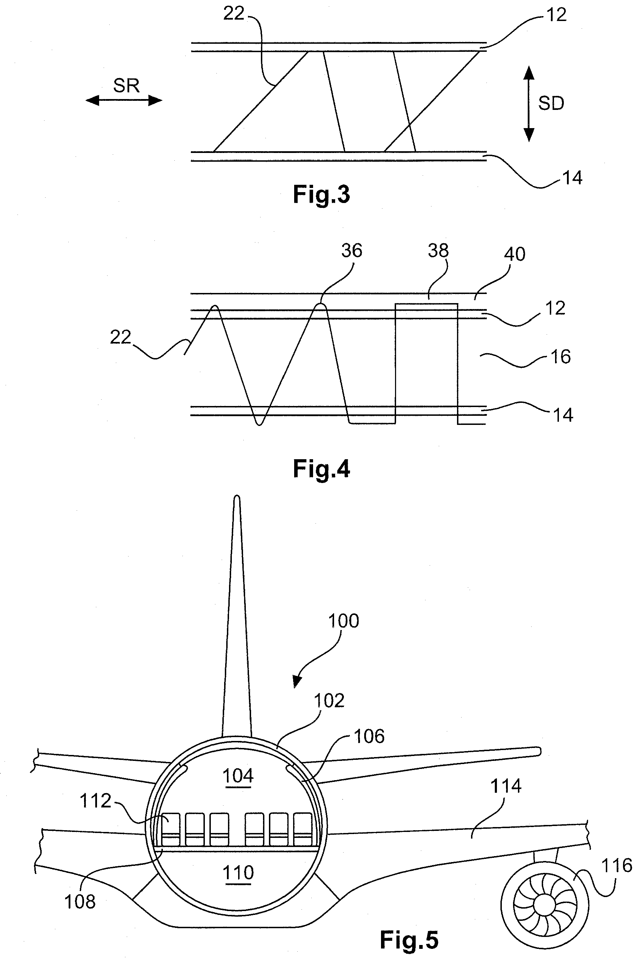

In Fig. 3 ist ein Ausführungsbeispiel gezeigt, bei dem die Armierungselemente 22 schräg verlaufen, z.B. zu einer Schichtrichtung *S_{R}* und einer Schichtdicke *S_{D}.*

Fig. 4 zeigt ein Ausführungsbeispiel, bei dem die Armierungselemente 22 als Vernähung ausgebildet sind und beispielsweise schlaufenartig die Verbindung zwischen den Armierungselementen 22 und der ersten bzw. zweiten Schicht 12, 14 herstellen, was mit Bezugszeihen 36 angedeutet ist. Die Vernähung kann beispielsweise schräg verlaufend in Form eines Zickzackmusters angeordnet sein, oder auch senkrecht verlaufen, wobei die Schlaufen dann als eine Art Brückensegmente 38 ausgebildet sind.

Gemäß einem weiteren Beispiel, das in Fig. 4 als Option gezeigt ist, kann auf wenigstens einer der beiden äußeren Seiten auf der ersten bzw. zweiten Schicht 12, 14 eine weitere Schicht vorgesehen sein, beispielsweise als Schutzschicht gegenüber UV-Strahlung oder gegenüber anderer Einflüsse, oder auch als weitere Schicht zur Beeinflussung der akustischen Eigenschaften, z.B. als Diffusor. Die weitere Schicht 40 kann auch den optischen Abschluss bei einem Kabinenpaneel bilden, das dem Raum zugewandt ist.

Wie bereits erwähnt, können gemäß einem weiteren Beispiel die Armierungselemente 22 als Fadenelemente ausgebildet sein, die mit dem aushärtbaren Matrixmaterial infiltrierbar sind.

Gemäß einem (nicht näher gezeigten) Ausführungsbeispiel ist eine Sperrbehandlung der Zwischenlage wenigstens im Bereich der Armierungselemente vorgesehen, um ein Eindringen von Matrixmaterial in die Zwischenlage zu verhindern.

Fig. 5 zeigt ein Luftfahrzeug 100 in einem schematischen Querschnitt. Das Luftfahrzeug 100 weist eine Rumpfkonstruktion 102 auf, und einen darin angeordneten Kabinenbereich 104. Der Kabinenbereich 104 weist eine Innenverkleidung 106 auf. Zur Verbesserung der akustischen Eigenschaften ist wenigstens ein Teil der Innenverkleidung als Akustik-Kabinenpaneele nach einem der oberhalb genannten Ausführungsbeispiele ausgebildet. In dem Kabinenbereich, der beispielsweise durch eine Zwischenbodenkonstruktion 108 von einem darunter liegenden Frachtladebereich 110 abgetrennt ist, sind auch noch schematisch Passagiersitze 112 angedeutet. Es sei daraufhingewiesen, dass weitere Einbauten, wie beispielsweise oberhalb der Sitze befindliche Gepäckfächer, zur Vereinfachung der Zeichnung nicht dargestellt sind. Das Luftfahrzeug 100 ist außerdem mit Flügelkonstruktionen 114 gezeigt, an denen beispielsweise Triebwerke 116 angeordnet sind. Durch Ausbildung wenigstens eines Teils der Paneele der Innenverkleidung 106 als Akustik-Kabinenpaneele 10 wird der Aufenthaltskomfort der Passagiere an Bord des Luftfahrzeugs in akustischer Hinsicht verbessert, in dem beispielsweise eine Schalltransmission von den außerhalb befindlichen Turbinen 116 in den Kabinenbereich 104 hinein durch die Paneele zumindest gedämpft wird.

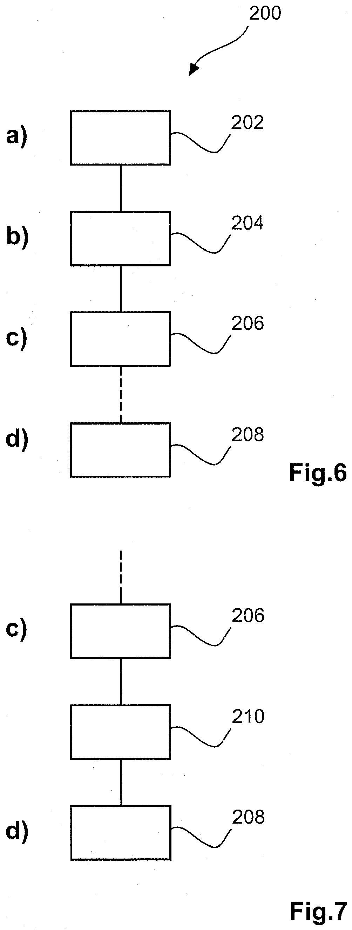

Fig. 6 zeigt ein Beispiel eines Verfahrens 200 zur Herstellung eines Akustik-Kabinenpaneels. Das Verfahren 200 weist dabei die folgenden Schritte auf:
- In einem ersten Schritt 202 wird eine Zwischenschicht zwischen einer ersten und einer zweiten Schicht angeordnet, wobei die erste und die zweite Schicht durch die Zwischenschicht voneinander beabstandet sind. Die Zwischenschicht weist wenigstens eine Zwischenlage aus einem Kernmaterial auf, das in der Zwischenschicht angeordnet ist. Erfindungsgemäß ist in wenigstens einer der beiden ersten und zweiten Schichten ein mit Matrixmaterial getränktes Prepreg vorgesehen.
- In einem zweiten Schritt 204 wird eine Vielzahl von Armierungselementen angeordnet, die sich von der ersten bis zur zweiten Schicht durch die wenigstens eine Zwischenlage erstrecken und die in fertigem Zustand des Paneels zug- und druckbelastbar sind.
- In einem dritten Schritt 206 wird wenigstens ein Teil der Armierungselemente mit einem aushärtbaren Matrixmaterial infiltriert. Die erste Schicht, die Zwischenschicht und die zweite Schicht bilden zusammen mit den Armierungselementen ein Kernverbundbauteil.

In Fig. 6 ist außerdem als Option gezeigt, dass die Armierungselemente als Fadenelemente ausgebildet sein können, wobei weiter ein vierter Schritt 208 vorgesehen ist, in dem das Matrixmaterial aushärtet.

Das Aushärten ist in einem weiteren Beispiel auch bei Armierungselementen vorgesehen, die nicht als Fadenelemente ausgebildet sind, sondern beispielsweise als eingesetzte Stifte oder andere Einsätze.

Der erste Schritt 202 wird auch als Schritt a) bezeichnet, der zweite Schritt 204 als Schritt b), der dritte Schritt 206 als Schritt c), und der als Option dargestellte vierte Schritt 208 als Schritt d).

In Fig. 7 ist ein weiteres Beispiel gezeigt, bei dem vor dem Aushärten des Matrixmaterials in dem vierten Schritt 208 ein weiterer Schritt 210 vorgesehen ist, in welchem ein Anpassen an eine Form oder eine Kontur erfolgt. Beispielsweise erfolgt das Anordnen der Armierungselemente in dem zweiten Schritt 204 vor der Formgebung des weiteren Schritts 210.

In Fig. 7 ist beispielsweise dargestellt, dass die Formgebung in dem weiteren Schritt 210 nach dem Infiltrieren im dritten Schritt 206 erfolgt.

In einem weiteren Beispiel ist vorgesehen, dass die Formgebung vor dem Infiltrieren der Armierungselemente erfolgt.

Die oberhalb beschriebenen Ausführungsbeispiele können in unterschiedlicher Art und Weise kombiniert werden. Insbesondere können auch Aspekte der Vorrichtungen für Ausführungsformen des Verfahrens sowie Verwendung der Vorrichtungen verwendet werden und umgekehrt.

## Patentansprüche

1. Akustik-Kabinenpaneel (10), aufweisend:
- eine erste (12) und eine zweite Schicht (14), die durch eine Zwischenschicht (16) voneinander beabstandet sind und zusammen mit einer Vielzahl von Armierungselementen (22) ein Kemverbundbauteil (24) bilden;
- wenigstens eine Zwischenlage (18) aus einem Kernmaterial (20), das in der Zwischenschicht angeordnet ist;
wobei sich die Armierungselemente von der ersten bis zur zweiten Schicht durch die wenigstens eine Zwischenlage erstrecken und in fertigem Zustand des Paneels zug- und druckbelastbar sind;
wobei die Armierungselemente wenigstens teilweise mit einem aushärtbaren Matrixmaterial infiltrierbar sind;
wobei wenigstens ein mit Matrixmaterial getränktes Prepreg (26) in der ersten und/oder der zweiten Schicht vorgesehen ist;
wobei die mit Matrixmaterial zu infiltrierenden Armierungselemente mit dem Prepreg in Verbindung stehen;
wobei die Zwischenlage einen Werkstoff aufweist, der elastisch komprimierbar ist und eine geringe Steifigkeit aufweist und wobei das Kernmaterial ein Silikonschaumgummi ist.

2. Akustik-Kabinenpaneel nach einem der vorhergehenden Ansprüche, wobei die Armierungselemente biegesteif sind; und
wobei die Armierungselemente mit der ersten und der zweiten Schicht verbunden sind.

3. Akustik-Kabinenpaneel nach einem der vorhergehenden Ansprüche, wobei die Armierungselemente als Fadenelemente ausgebildet sind; und
wobei die Fadenelemente mit dem aushärtbaren Matrixmaterial infiltriert sind; und
wobei, vorzugsweise, die Armierungselemente zu einer Schichtrichtung (S_{R}) und Schichtdicke (S_{D}) schräg verlaufen.

4. Akustik-Kabinenpaneel nach einem der vorhergehenden Ansprüche, wobei die Zwischenlage wenigstens im Bereich der Armierungselemente mit einer Sperrbehandlung versehen ist, die ein Eindringen von Matrixmaterial beim Infiltrieren der Armierungselemente verhindert.

5. Akustik-Kabinenpaneel nach einem der vorhergehenden Ansprüche, wobei die erste und die zweite Schicht aus faserverstärktem Kunststoff und/oder einem Metallwerkstoff bestehen.

6. Luftfahrzeug (100), mit wenigstens einem in einer Rumpfkonstruktion (102) angeordneten Kabinenbereich (104), der eine Paneele aufweisende Innenverkleidung (106) umfasst;
wobei wenigstens ein Teil der Paneele als Akustik-Kabinenpaneele nach einem der vorhergehenden Ansprüche ausgebildet ist.

7. Verfahren (200) zur Herstellung eines Akustik-Kabinenpaneels, das die folgenden Schritte aufweist:
a) Anordnen (202) einer Zwischenschicht zwischen einer ersten und einer zweiten Schicht, die durch die Zwischenschicht voneinander beabstandet sind;
wobei die Zwischenschicht wenigstens eine Zwischenlage aus einem Kernmaterial aufweist, das in der Zwischenschicht angeordnet ist;
wobei die Zwischenlage einen Werkstoff aufweist, der elastisch komprimierbar ist und eine geringe Steifigkeit aufweist und wobei das Kernmaterial ein Silikonschaumgummi ist;
wobei ein mit Matrixmaterial getränktes Prepreg in wenigstens einer der beiden ersten und zweiten Schichten vorgesehen ist;
b) Anordnen (204) einer Vielzahl von Armierungselementen, die sich von der ersten bis zur zweiten Schicht durch die wenigstens eine Zwischenlage erstrecken und die in fertigem Zustand des Paneels zug- und druckbelastbar sind; und
c) Infiltrieren (206) wenigstens eines Teils der Armierungselemente mit einem aushärtbaren Matrixmaterial;
wobei die erste Schicht, die Zwischenschicht und die zweite Schicht zusammen mit den Armierungselementen ein Kernverbundbauteil bilden.

8. Verfahren nach Anspruch 7, wobei die Armierungselemente als Fadenelemente ausgebildet sind; und wobei weiter vorgesehen ist: d) Aushärten (208) des Matrixmaterials.

9. Verfahren nach Anspruch 7 oder 8, wobei vor dem Aushärten des Matrixmaterials ein Anpassen (210) an eine Form oder eine Kontur vorgesehen ist.

10. Verfahren nach Anspruch 7, 8 oder 9, wobei vor dem vollständigen Aushärten des Matrixmaterials vorgesehen ist, dass das Matrixmaterial zu einem Teil aushärtet und sich das Matrixmaterial dann in einem B-Stage Zustand befindet, in dem ein Teil des Matrixmaterials ausgehärtet und ein Teil noch nicht ausgehärtet ist; und
wobei das Anpassen an eine Form oder eine Kontur danach vorgesehen ist.

11. Verfahren nach Anspruch 9 oder 10, wobei das Anordnen der Armierungselemente vor der Formgebung erfolgt.

12. Verfahren nach einem der Ansprüche 7 bis 11, wobei das mit Matrixmaterial getränkte Prepreg in einer der beiden ersten und zweiten Schichten vorgesehen ist; und
wobei eine Formgebung vor dem Aufbringen eines mit Matrixmaterial getränkten Prepregs in der anderen der beiden ersten und zweiten Schichten eine Formgebung erfolgt, und das mit Matrixmaterial getränkte Prepreg danach aufgebracht wird.

13. Verwendung eines Akustik-Kabinenpaneels nach einem der Ansprüche 1 bis 5 in einem Fahrzeug.

## Claims

1. Acoustic cabin panel (10) comprising:
- a first (12) and a second layer (14) which are separated by an intermediate layer (16) and form together with a plurality of reinforcing elements (22) a core composite component (24);
- at least one intermediate layer (18) of a core material (20) which is arranged in the intermediate layer; wherein the reinforcing elements extending from the first to the second layer through the at least one intermediate layer and in the finished state of the panels are resistant to tensile and compressive loads; wherein the reinforcing elements are at least partially infiltratable with a curable matrix material; wherein at least one prepreg (26) impregnated with matrix material in the first and/or the second layer is provided; wherein the reinforcing elements to be infiltrated with matrix material are connected to the prepreg; and wherein the intermediate layer comprising a material which is elastically compressible and has a low stiffness and wherein the core material is a silicone foam rubber.

2. Acoustic cabin panel according to any of the foregoing claims, wherein the reinforcing elements are rigid; and wherein the reinforcing elements are connected with the first and the second layer.

3. Acoustic cabin panel according to one of the preceding claims, wherein the reinforcing elements are designed as thread elements; and wherein the thread elements are infiltrated with the curable matrix material; and wherein, preferably, the reinforcing elements run diagonally to a layer direction (S_{R}) and layer thickness (S_{D}).

4. Acoustic cabin panel according to one of the preceding claims, wherein the intermediate layer is provided, at least in the area of the reinforcing elements, with a barrier treatment which prevents matrix material from penetrating when the reinforcing elements are infiltrated.

5. Acoustic cabin panel according to any of the preceding claims, wherein the first and the second layer consisting of fibre-reinforced plastic and/or a metal material.

6. Aircraft (100), having at least one in a fuselage structure (102) arranged cabin area (104), which has an inner lining (106) comprising panels, wherein at least a portion of the panels are designed as acoustic cabin panels according to one of the preceding claims.

7. Method (200) of manufacturing an acoustic cabin panel comprising the following steps:
a) disposing (202) an intermediate layer between a first and a second layer, which are separated from each other by the intermediate layer; wherein said intermediate layer comprising at least one intermediate layer of a core material disposed in said intermediate layer; wherein said intermediate layer comprises a material which is elastically compressible and has low stiffness and wherein said core material is a silicone foam rubber; wherein a prepreg impregnated with matrix material is provided in at least one of said first and second layers;
b) Arranging (204) a plurality of reinforcing elements extending from the first to the second layer through the at least one intermediate layer and which are tensile and compressive in the finished state of the panel; and
c) Infiltrating (206) at least part of the reinforcing elements with a curable matrix material; wherein the first layer, the intermediate layer and the second layer together with the reinforcing elements form a core composite component.

8. Method according to claim 7, wherein the reinforcing elements are formed as thread elements; and wherein it is further provided:
d) Curing (208) the matrix material.

9. Method according to claim 7 or 8, wherein prior to curing the matrix material it is provided an adaptation (210) to a shape or contour.

10. Method according to claim 7, 8 or 9, wherein before the complete curing of the matrix material is provided that the matrix material is partially cured and the matrix material is then in a B-stage state in which a part of the matrix material is cured and a part is not yet cured; and wherein the adaptation to a shape or contour is provided for afterwards.

11. Method according to claim 9 or 10, wherein the arranging of the reinforcing elements is carried out before shaping.

12. Method according to any one of claims 7 to 11, wherein the prepreg impregnated with matrix material is provided in one of the first and second layers; and wherein a shaping process is carried out prior to the application of a prepreg impregnated with matrix material in the other of the both first and second layers, and the prepreg impregnated with matrix material is applied afterwards.

13. Using an acoustic cabin panel according to any one of claims 1 to 5 in a vehicle.

## Revendications

1. Panneau acoustique de la cabine (10) comprenant :
- une première (12) et une deuxième couche (14) qui sont séparées par une couche intermédiaire
(16) et forment avec une pluralité d'éléments de renforcement (22) un élément composite de base (24);
- au moins une couche intermédiaire (18) d'un matériau de noyau (20) qui est disposé dans la couche intermédiaire; dans lequel les éléments de renforcement s'étendant de la première à la deuxième couche à travers la au moins une couche intermédiaire et à l'état fini des panneaux sont résistants aux charges de traction et de compression ; dans lequel les éléments de renforcement sont au moins partiellement infiltrables avec un matériau de matrice durcissable; dans lequel il est prévu au moins un préimprégné (26) imprégné de matériau de matrice dans la première et/ou la deuxième couche; dans lequel les éléments de renforcement à infiltrer avec le matériau de matrice sont reliés au préimprégné; et dans lequel la couche intermédiaire comprend un matériau qui est élastiquement compressible et qui a une faible rigidité et dans lequel le matériau de noyau est un caoutchouc mousse de silicone.

2. Panneau acoustique de cabine selon l'une des revendications précédentes, dans lequel les éléments de renforcement sont rigides; et dans lequel les éléments de renforcement sont reliés à la première et à la deuxième couche.

3. Panneau acoustique de cabine selon l'une des revendications précédentes, dans lequel les éléments de renforcement sont conçus comme des éléments filaires; et dans lequel les éléments filaires sont infiltrés avec le matériau de matrice durcissable; et dans lequel, de préférence, les éléments de renforcement s'étendent en diagonale par rapport à une direction de couche (S_{R}) et une épaisseur de couche (SD).

4. Panneau acoustique de cabine selon l'une des revendications précédentes, dans lequel la couche intermédiaire est pourvue, au moins dans la zone des éléments de renforcement, d'un traitement de barrière qui empêche la pénétration du matériau de la matrice lorsque les éléments de renforcement sont infiltrés.

5. Panneau acoustique de cabine selon l'une des revendications précédentes, dans lequel la première et la deuxième couche sont constituées de plastique renforcé par des fibres et/ou d'un matériau métallique.

6. Aéronef (100), ayant au moins une zone de cabine (104) disposée dans une structure de fuselage (102), qui a un revêtement intérieur (106) comprenant des panneaux, dans lequel au moins une partie des panneaux sont conçus comme des panneaux acoustiques de cabine selon l'une des revendications précédentes.

7. Procédé (200) de fabrication d'un panneau acoustique de cabine comprenant les étapes suivantes :
a) disposer (202) une couche intermédiaire entre une première et une deuxième couche, qui sont séparées l'une de l'autre par la couche intermédiaire ; dans lequel ladite couche intermédiaire comprend au moins une couche intermédiaire d'un matériau de noyau disposé dans ladite couche intermédiaire ; dans lequel ladite couche intermédiaire comprend un matériau qui est élastiquement compressible et a une faible rigidité et dans lequel ledit matériau de noyau est un caoutchouc mousse de silicone ; dans lequel un préimprégné imprégné d'un matériau de matrice est prévu dans au moins une desdites première et deuxième couches ;
b) disposer (204) une pluralité d'éléments de renforcement s'étendant de la première à la deuxième couche à travers la au moins une couche intermédiaire et qui sont résistants à la traction et à la compression à l'état fini du panneau ; et
c) Infiltrer (206) au moins une partie des éléments de renforcement avec un matériau de matrice durcissable ; la première couche, la couche intermédiaire et la deuxième couche formant avec les éléments de renforcement un composant composite central.

8. Procédé selon la revendication 7, dans lequel les éléments de renforcement sont formés comme des éléments de fil ; et dans lequel il est en outre prévu : d) le durcissement (208) du matériau de la matrice.

9. Procédé selon la revendication 7 ou 8, dans lequel, avant le durcissement du matériau de matrice, il est prévu une adaptation (210) à une forme ou un contour.

10. Procédé selon la revendication 7, 8 ou 9, dans lequel, avant le durcissement complet du matériau de matrice, il est prévu que le matériau de matrice soit partiellement durci et que le matériau de matrice soit alors dans un état d'étape B dans lequel une partie du matériau de matrice est durcie et une partie n'est pas encore durcie ; et dans lequel l'adaptation à une forme ou à un contour est prévue ensuite.

11. Procédé selon la revendication 9 ou 10, dans lequel l'agencement des éléments de renforcement est effectué avant le façonnage.

12. Procédé selon l'une quelconque des revendications 7 à 11, dans lequel le préimprégné imprégné de matériau de matrice est prévu dans l'une des première et deuxième couches ; et dans lequel un processus de mise en forme est effectué avant l'application d'un préimprégné imprégné de matériau de matrice dans l'autre des première et deuxième couches, et le préimprégné imprégné de matériau de matrice est appliqué ensuite.

13. Utilisation d'un panneau acoustique de cabine selon l'une des revendications 1 à 5 dans un véhicule.
